# EUROPEAN PATENT APPLICATION

(11) **EP 4 186 580 A1**
(43) Date of publication of application: **31.05.2023**
(21) Application number: 21845796.8
(22) Date of filing: 19.07.2021
(51) Int. Cl.: B01D 45/12, G01N 29/32

(54) **GAS-LIQUID SEPARATOR FOR GAS SENSOR**

(30) Priority: 22.07.2020 JP 2020124950
(71) Applicant: Nisshinbo Holdings Inc., Tokyo 103-8650 (JP); Ueda Japan Radio Co., Ltd., Ueda-shi, Nagano 386-8608 (JP); Japan Radio Co., Ltd., Mitaka-shi, Tokyo 181-0002 (JP)
(72) Inventor: SEO Daisuke, Ueda-shi, Nagano 386-8608 (JP); NAKAMURA Teruo, Ueda-shi, Nagano 386-8608 (JP); TAKIZAWA Hiroyuki, Ueda-shi, Nagano 386-8608 (JP); NIHEI Ayumi, Ueda-shi, Nagano 386-8608 (JP); KONDA Takashi, Tokyo 103-8650 (JP)
(74) Representative: Wunderlich & Heim Patentanwälte Partnerschaftsgesellschaft mbB
(86) International application number: PCT/JP2021/027004
(87) International publication number: WO 2022/019277

(57) **Abstract**

The purpose of the present invention is to achieve a gas-liquid separator that improves the performance of a gas sensor. The gas-liquid separator (16) comprises: a swirl structure that causes a gas heading from upstream to downstream to swirl about a flow axis heading from upstream to downstream; a separation structure that discharges outward liquid components contained in the gas passing through the swirl structure; and a deflection structure that is provided downstream of the swirl structure and deflects the gas that has passed through the swirl structure. The deflection structure is provided with: a narrowing core portion (26) that has a three-dimensional shape which narrows from upstream to downstream; and deflecting fins (32) that are provided to the side surface of the narrowing core portion (26) and deflect the gas in the opposite direction to the swirling direction resulting from the swirl structure.

## Description

### TECHNICAL FIELD

The present invention relates to a gas-liquid separator for a gas sensor, and in particular, a gas-liquid separator which swirls a gas to separate liquid from the gas.

### BACKGROUND

Research and development work has been widely carried out on fuel cell vehicles which are driven to travel by electric power supplied from fuel cells. The fuel cells generate electric power by means of a chemical reaction between hydrogen and oxygen. In general, hydrogen is supplied as a fuel to the fuel cells, while oxygen is taken from ambient air into the fuel cells. The fuel cell vehicles are equipped with a hydrogen tank from which hydrogen is supplied to the fuel cells. When an amount of hydrogen in the hydrogen tank is decreased, hydrogen is supplied to the hydrogen tank in the fuel cell vehicle from a hydrogen supplying device installed in a service station.

Because hydrogen is a flammable gas, it is necessary that any leakage of hydrogen should be monitored when the fuel cell is utilized. In this respect, hydrogen sensors have been commonly used along with the fuel cells. The hydrogen sensors have functions of measuring a concentration of hydrogen contained in air and issuing an alarm when the concentration of hydrogen exceeds a predetermined value.

Note that as technology related to the invention of this application, below-listed Patent Document 1 describes a gas-liquid separator used for a fuel cell. The gas-liquid separator is equipped with a swirler and is configured to rotate the swirler for causing a gas to swirl in order to separate liquid from the gas. In a fuel cell power generation system described in Patent Document 1, water is separated from air ejected from the fuel cell by means of the gas-liquid separator. The water separated from the ejected air is used for moisturizing air which is supplied to the fuel cell.

### CITATION LIST

### PATENT LITERATURE

Patent Document 1: JP 2002-324561 A

### SUMMARY

### TECHNICAL PROBLEM

There are some gas sensors, such as hydrogen sensors, that measure a concentration of a particular gas based on a propagation velocity of an ultrasonic wave. Such gas sensors are provided with a space in which the concentration of the gas is measured (concentration measuring space). Ultrasonic transducers for transmitting and receiving the ultrasonic wave are disposed in the concentration measuring space. The propagation velocity of the ultrasonic wave is detected based on a predetermined propagation distance and a propagation time elapsed from transmission of the ultrasonic wave from an ultrasonic transmission transducer until the ultrasonic wave having propagated through the concentration measurement space is received in an ultrasonic reception transducer.

In the gas sensor which obtains the propagation velocity of the ultrasonic wave, when moisture, such as water droplets or mist, is contained in air which flows into the concentration measuring space, a measurement accuracy of the propagation time of the ultrasonic wave having propagated through the concentration measuring space may be decreased, and a measurement accuracy of a concentration of the gas may be accordingly decreased. Then, it may be considered that the moisture, such as water droplets or mist, contained in the air to be introduced into the gas sensor is reduced or eliminated by means of a gas-liquid separator. However, when gas-liquid separators for causing a gas to swirl in order to separate liquid from the gas are used, the gas introduced into the concentration measuring space will flow in varying directions, which may result in a decreased measurement accuracy of the propagation time of the ultrasonic wave, and thus a decreased measurement accuracy of the concentration of the gas.

An object of the present invention is to implement a gas-liquid separator capable of improving performance of a gas sensor.

### SOLUTION TO PROBLEM

The present invention is characterized by including a swirl structure configured to cause a gas flowing from upstream to downstream to swirl about a flow axis extending from upstream to downstream, a separation structure configured to release a liquid component, which is contained in the gas having passed through the swirl structure, out of the separation structure, and a deflection structure disposed downstream of the swirl structure and configured to deflect the gas having passed through the swirl structure, the deflection structure including a narrowing core portion formed in a three-dimensional tapered shape being tapered down toward downstream, and a deflecting fin disposed on a side surface of the narrowing core portion and configured to deflect the gas to a direction opposite a swirling direction established by the swirl structure.

Preferably, the side surface of the narrowing core portion has an inclination relative to the flow axis, and the inclination of the side surface located downstream of a predetermined position on the flow axis is smaller than the inclination of the side surface located upstream of the predetermined point.

Preferably, a downstream end of the narrowing core portion has a curved surface protruding downstream.

Preferably, the swirl structure includes an expanding core portion formed in a three-dimensional expanded shape being expanded from upstream toward downstream and a swirling fin disposed on a side surface of the expanding core portion and configured to create a swirl of the gas, and a downstream end of the expanding core portion is connected to an upstream end of the narrowing core portion.

Preferably, a housing is provided, the housing configured to surround the narrowing core portion in a state of maintaining a space from the side surface of the narrowing core portion, and the separation structure includes a hole defined at a position corresponding to the upstream end of the narrowing core portion, the hole penetrating through the housing from inside to outside thereof, and includes a protrusion located adjacent to the hole on a downstream side thereof and protruding inward of the housing.

Preferably, the narrowing core portion is a rotationally symmetric body having a center axis defined by the flow axis, and the deflecting fin includes a plurality of deflecting fins disposed at equal angular intervals along a circumferential direction on the side surface around the flow axis.

### ADVANTAGEOUS EFFECTS OF INVENTION

According to the present invention, the gas-liquid separator capable of improving performance of the gas sensor can be implemented.

### BRIEF DESCRIPTION OF DRAWINGS

FIG. 1 is a diagram showing a configuration of a fuel cell system.
FIG. 2 is a cross-sectional perspective view of a gas-liquid separator.
FIG. 3 is a diagram showing a cross section of the gas-liquid separator.
FIG. 4A is a perspective view of a core portion.
FIG. 4B is a perspective view of the core portion.
FIG. 5A is a diagram showing a cross section of the gas-liquid separator.
FIG. 5B is a diagram showing a cross section of the gas-liquid separator.
FIG. 5C is a diagram showing a cross section of the gas-liquid separator.
FIG. 5D is a diagram showing a cross section of the gas-liquid separator.
FIG. 5E is a diagram showing a cross section of the gas-liquid separator.
FIG. 5F is a diagram showing a cross section of the gas-liquid separator.

### DESCRIPTION OF EMBODIMENTS

A fuel cell system and a gas-liquid separator according to an embodiment of this invention will be described with reference to the drawings. Identical components illustrated in a plurality of diagrams are designated by identical reference numerals, and descriptions related to these components will be simplified. Further, as used herein, terms representing shapes, such as "cylinder", or "annulus", denote not only precisely defined geometrical shapes but also denote deformed forms of the geometrical shapes that are deformed within a range in which components having the deformed forms can exercise intended functions of the components.

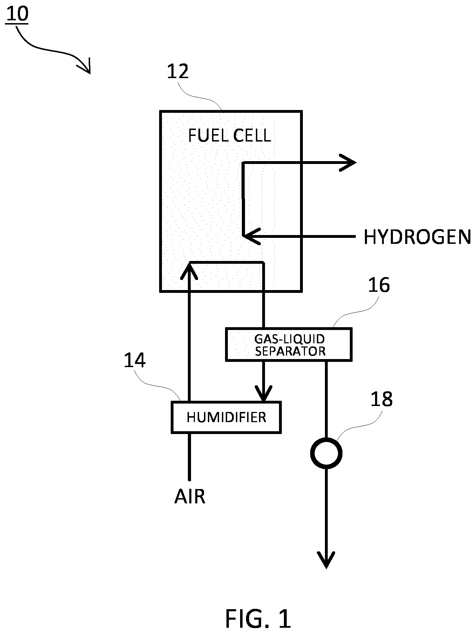

FIG. 1 shows a configuration of a fuel cell system 10 according to an embodiment of the present invention. The fuel cell system 10 includes a fuel cell 12, a humidifier 14, a gas-liquid separator 16, and a hydrogen sensor 18. The fuel cell 12 is supplied with air including oxygen. That is, the air is introduced into the humidifier 14 and appropriately moisturized in the humidifier 14. The air moisturized by the humidifier 14 is supplied to the fuel cell 12. In addition to the air, hydrogen is separately supplied as a fuel to the fuel cell 12.

The fuel cell 12 produces electric power by means of a chemical reaction between hydrogen and oxygen. Water created through the chemical reaction between hydrogen and oxygen is introduced from the fuel cell 12 into the gas-liquid separator 16 along with the air. The gas-liquid separator 16 separates moisture from the air, and directs the separated moisture to the humidifier 14. The gas-liquid separator 16 discharges the air from which moisture is removed. For the air discharged from the gas-liquid separator 16, the hydrogen sensor 18 detects a concentration of hydrogen in the air.

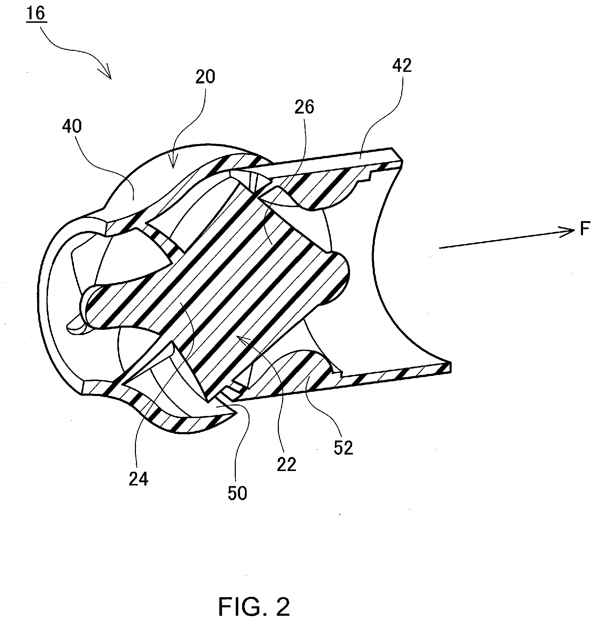

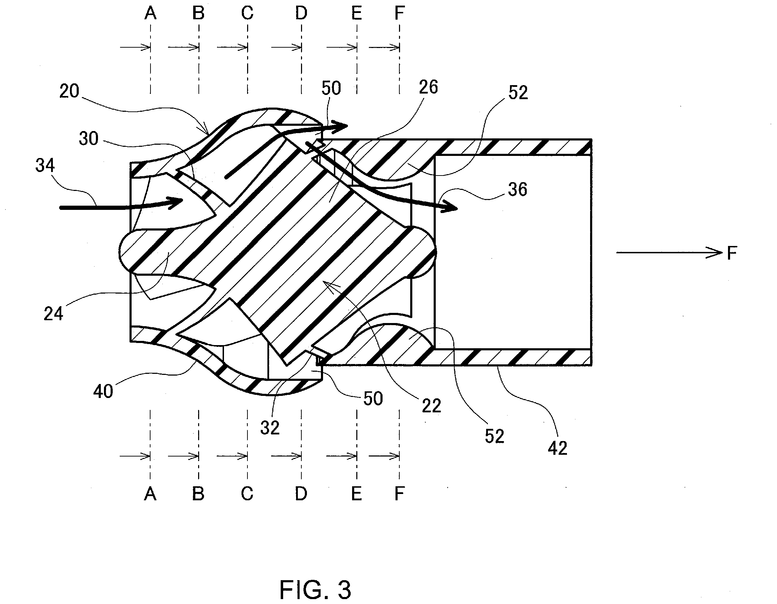

FIG. 2 shows a cross-sectional perspective view of the gas-liquid separator 16. This diagram shows a flow axis F which is located on a center axis of the gas-liquid separator 16 and oriented to point in a direction of an air flow through the gas-liquid separator 16. The gas-liquid separator 16 has a structure in which a core portion 22 is concentrically disposed within a cylindrical housing 20. FIG. 3 shows an axial cross section of the gas-liquid separator 16 that is viewed by cutting the gas-liquid separator 16 at a plane passing through the flow axis F.

The core portion 22 is a rotationally symmetric body having a center axis defined by the flow axis F, and is a substantially lemon-shaped member. As shown in FIG. 3, the core portion 22 has a diameter which is increased from an upstream side toward the downstream side until reaching a peak, and is decreased on a downstream side of the peak from the upstream side toward the downstream side. Accordingly, the core portion 22 includes an expanding core portion 24 formed in a three-dimensional expanded shape being expanded from upstream to downstream, and a narrowing core portion 26 formed in a three-dimensional tapered shape being tapered down toward the downstream side. That is, a downstream end of the expanding core portion 24 is joined to an upstream end of the narrowing core portion 26 to integrally form the core portion 22 with the expanding core portion 24 and the narrowing core portion 26. Fins for regulating a flow direction of air are disposed, as described below, on a side surface of the core portion 22.

A side surface of the expanding core portion 24 has a curved contour protruding inward in the axial cross section taken along the flow axis F. The side surface of the expanding core portion 24 may have a curved contour protruding outward in the axial cross section or have a straight contour. An upstream end surface of the expanding core portion 24 is a curved surface protruding upstream.

A side surface of the narrowing core portion 26 has a straight contour in the axial cross section. An inclination of the side surface of the narrowing core portion 26 with respect to the direction of the flow axis F may be less steep in a region of the side surface located downstream of a predetermined point on the flow axis F than that in a region of the side surface located upstream of the predetermined point. In this embodiment, the side surface of the narrowing core portion 26 is designed to approach the flow axis F while extending from upstream toward downstream and finally reach a downstream end surface after the inclination of the side surface with respect to the flow axis F becomes less steep. The side surface just before reaching the downstream end is substantially parallel to the flow axis F. The downstream end surface of the narrowing core portion 26 is a curved surface protruding downstream. It should be noted that the side surface of the narrowing core portion 26 may have a curved contour protruding outward in the axial cross section or have a curved contour protruding inward in the axial cross section.

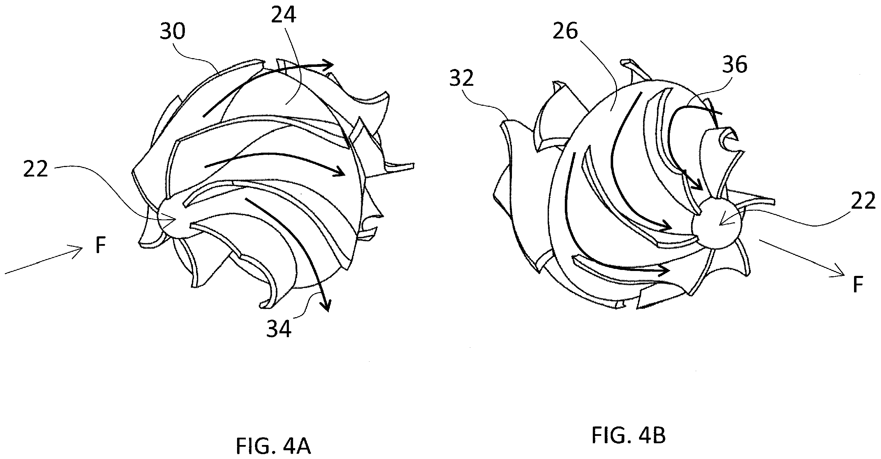

FIG. 4A shows a perspective view of the core portion 22 viewed from upstream, and FIG. 4B shows a perspective view of the core portion 22 viewed from downstream. As shown in FIG. 4A, a plurality of swirling fins 30 are disposed on the side surface of the expanding core portion 24 so as to be raised therefrom. In the example shown in FIG. 4A, six swirling fins 30 are disposed at 60-degree intervals (at equal angular intervals) along a circumferential direction of the side surface. The expanding core portion 24 and the six swirling fins 30 constitute a rotationally symmetric structure with respect to 60 degrees about the flow axis F. Each of the swirling fins 30 has a contour curved rightward when viewed in a direction from upstream to downstream. An outer side of each of the swirling fins 30 is brought into contact with an inner wall surface of the housing 20.

It should be noted that the number of swirling fins 30 disposed on the side surface of the expanding core portion 24 is not limited to six, and N swirling fins 30 may be disposed at intervals of (360° / N) along the circumferential direction on the side surface of the expanding core portion 24 where N is an integer of 2 or greater. Further, the intervals at which the swirling fins 30 are arranged may be determined depending on other factors, such as the shape of the expanding core portion 24, and need not necessarily be the equal angular intervals.

As shown in FIG. 4B, a plurality of deflecting fins 32 are disposed on the side surface of the narrowing core portion 26 so as to be raised therefrom. In the example shown in FIG. 4B, six deflecting fins 32 are disposed at 60-degree intervals (at equal angular intervals) along a circumferential direction of the side surface. The narrowing core portion 26 and the six deflecting fins 32 constitute a rotationally symmetric structure with respect to 60 degrees about the flow axis F. Each of the deflecting fins 32 has a contour curved leftward when viewed in the direction from upstream to downstream. An outer side of each of the deflecting fins 32 is brought into contact with the inner wall surface of the housing 20.

It should be noted that the number of deflecting fins 32 disposed on the side surface of the narrowing core portion 26 is not limited to six, and M deflecting fins 32 may be disposed at intervals of (360° / M) along the circumferential direction on the side surface of the narrowing core portion 26 where M is an integer of 2 or greater. Further, the intervals at which the deflecting fins 32 are arranged may be determined depending on other factors, such as the shape of the narrowing core portion 26, and need not necessarily be the equal angular intervals.

As indicated by an arrow 34 in FIG. 4A, air flowing onto the side surface of the expanding core portion 24 is directed by the swirling fins 30 to flow out of the expanding core portion 24 while turning rightward. This creates an air stream swirling clockwise when viewed from upstream, at the downstream end of the expanding core portion 24. As indicated by an arrow 36 in FIG. 4B, air flowing onto the side surface of the narrowing core portion 26 is directed by the deflecting fins 32 to flow toward an inner region of the narrowing core portion 26 while turning leftward. This applies a force to hamper the air having passed through the expanding core portion 24 from swirling, to thereby cancel the swirling air stream at a downstream end of the narrowing core portion 26.

Referring back to FIG. 3, the gas-liquid separator 16 is further explained in detail. The housing 20 is composed of an upstream housing 40 and a downstream housing 42. The upstream housing 40 is formed in a cylindrical shape having an annular cross section and designed to surround both the expanding core portion 24 and a partial upstream area of the narrowing core portion 26. The upstream housing 40 has a shape expanding radially from upstream to downstream while conforming to the side surface of the expanding core portion 24. The downstream housing 42 is formed in a cylindrical shape having a diameter smaller than a diameter of a downstream end part of the upstream housing 40 and designed to surround the remaining area of the narrowing core portion 26.

It should be noted that outside shapes of the upstream housing 40 and the downstream housing 42 need not necessarily be columnar. For example, the surfaces of the upstream housing 40 and the downstream housing 42 may be formed in various shapes. The upstream housing 40 may be designed to surround the expanding core section 24 and also surround a part of the narrowing core portion 26 in a state of maintaining a space from the side surface of the expanding core portion 24 and a space from a side surface of the part of the narrowing core portion 26. In addition, the downstream housing 42 may be designed to surround the narrowing core portion 26 in a state of maintaining a space from the side surface of the narrowing core portion 26.

A hole 50 is defined at a boundary between the upstream housing 40 and the downstream housing 42 to allow the inside of the housing 20 to communicate with the outside. That is, the hole 50 is formed at a position corresponding to the downstream end of the expanding core portion 24, or at a position corresponding to the upstream end of the narrowing core portion 26. The hole 50 may be located at a position between mutually adjacent swirling fins 30. Further, the hole 50 may be formed over the entire circumference of the annular boundary between the upstream housing 40 and the downstream housing 42.

A protrusion 52 protruding inward is formed on the inner wall surface of the downstream housing 42 at a position adjacent to the hole 50 on a downstream side thereof. The protrusion 52 may have an annular shape along a circumferential direction of the downstream housing 42. A region of the protrusion 52 located upstream of its most inwardly protruding position forms an inclined wall surface extending downstream along the side surface of the narrowing core portion 26 from the hole 50. The hole 50 and the protrusion 52 constitute a separation structure for separating moisture from air.

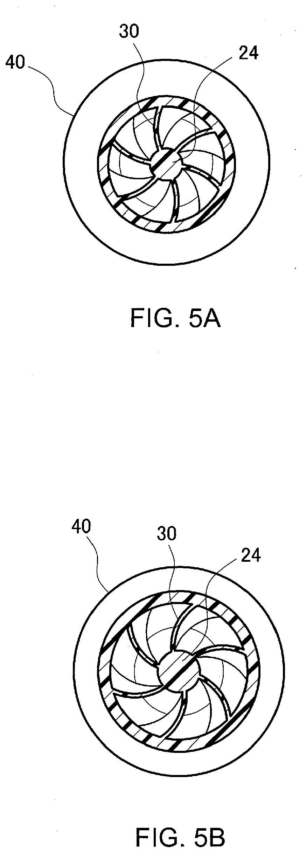

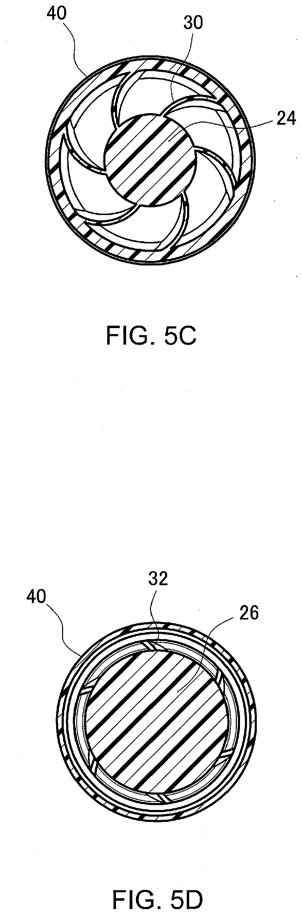

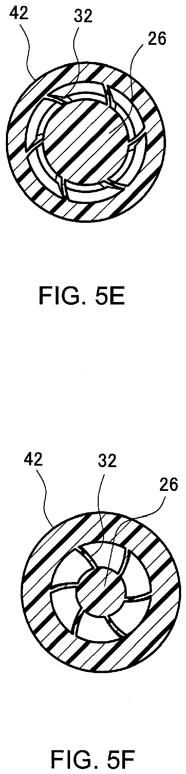

FIGs. 5A to 5F show cross sections of the gas-liquid separator 16 that are viewed by cutting the gas-liquid separator 16 along line AA, line BB, line CC, line DD, line EE, and line FF indicated in FIG. 3, respectively. In FIGs. 5A to 5C, the expanding core portion 24, the swirling fins 30, and the upstream housing 40 are shown in cross section. In FIG. 5D, the narrowing core portion 26, the deflecting fins 32, and the upstream housing 40 are shown in cross section. In FIGs. 5E and 5F, the narrowing core portion 26, the deflecting fins 32, and the downstream housing 42 are shown in cross section.

As shown in FIGs. 5A to 5C, the diameter of the expanding core portion 24 becomes greater from upstream to downstream. As shown in FIGs. 5D to 5F, the diameter of the narrowing core portion 26 becomes smaller from upstream to downstream. As can be seen from FIGs. 5A to 5C, the swirling fins 30 are curved in a clockwise direction. As can be seen from FIGs. 5D and 5F, the deflecting fins 32 are curved in a counterclockwise direction. Therefore, the curved direction of the deflecting fins 32 is opposite to the curved direction of the swirling fins 30.

Action and effect of the gas-liquid separator 16 will be described with reference to FIG. 3. Air that has flowed from upstream of the upstream housing 40 is directed to an outer region while flowing downstream along the side surface of the expanding core portion 24 and each of the swirling fins 30. The air is swirled along the circumferential direction of the expanding core portion 24 at the downstream end thereof. Moisture, such as water droplets or mist, contained in the air is swirled in an outer part of the swirling air due to a centrifugal force. For this reason, the moisture, such as water droplets or mist, contained in the air is released through the hole 50 out of the housing 20 along with some of the air. The side surface of the expanding core portion 24 has a shape being warped toward the outside. Due to such a warped shape, the centrifugal force acting on the moisture, such as water droplets or mist, is increased in a downstream region of the expanding core portion 24, to thereby facilitate separating a greater amount of moisture, such as water droplets or mist, from the air. On the other hand, remaining air from which the moisture, such as water droplets or mist, has been released out of the housing 20 is directed by the protrusion 52 into a space between the inner wall surface of the downstream housing 42 and the narrowing core portion 26.

In this way, the expanding core portion 24 and the swirling fins 30 constitute a swirl structure for causing the air (gas), which flows from upstream to downstream, to swirl around the flow axis F extending from upstream to downstream. The hole 50 and the protrusion 52 constitute the separation structure for releasing the moisture (liquid component) contained in the air having passed through the swirl structure, out of the housing 20. A deflection structure for deflecting the air having passed through the swirl structure is disposed downstream of the swirl structure, which will be described below. The deflection structure includes the narrowing core portion 26 and the deflecting fins 32. The deflecting fins 32 deflect the air in a direction opposite to the swirling direction generated by the swirl structure.

The air directed to the space between the inner wall surface of the downstream housing 42 and the narrowing core portion 26 flows downstream along the side surface of the narrowing core portion 26 and each of the deflecting fins 32 while also flowing inward. When viewed from upstream to downstream, a curve of each of the deflecting fins 32 is opposite in direction to a curve of each of the swirling fins 30. Therefore, because a force is exerted on the air having passed through the expanding core portion 24, to cancel a swirl of the air, the swirl of the air is suppressed at the downstream end of the narrowing core portion 26.

In addition, the inclination of the side surface of the narrowing core portion 26 relative to the flow axis F becomes gentler on the downstream side of the narrowing core portion 26, and the side surface becomes substantially parallel to the flow axis F in this embodiment. In this way, the direction of the air reaching the downstream end of the narrowing core portion 26 is brought close to or aligned with the direction of the flow axis F. Further, the downstream end surface of the narrowing core portion 26 has the curved surface protruding downstream. In general, eddies and turbulent flows are created at a meeting point of air streams coming from different directions. The structure of the narrowing core portion 26 functions to prevent eddies or turbulent flows from occurring in the air arriving at the downstream end of the narrowing core portion 26. When the hydrogen sensor is used for air that is passed through the gas-liquid separator 16 according to the embodiment in which moisture, such as water droplets or mist, is separated from the air and a swirl of the air is suppressed, the measurement accuracy of the hydrogen sensor can be enhanced.

The above description presents the embodiment of using the gas-liquid separator for the air which includes hydrogen. The gas-liquid separator according to the present invention may be used for air which includes other gases to be measured. Further, the above description presents the embodiment in which moisture is eliminated from air. The gas-liquid separator according to the present invention may be used for separating other liquid components from a gas. Still further, in the above-described embodiment, the swirling fins 30 are curved in the clockwise direction when viewed from upstream to downstream, while the deflecting fins 32 are curved in the counterclockwise direction when viewed from upstream to downstream. In addition to such a form, another form may be employed, in which the swirling fins 30 are curved in the counterclockwise direction when viewed from upstream to downstream, while the deflecting fins 32 are curved in the clockwise direction when viewed from upstream to downstream.

### REFERENCE SIGN LIST

10 fuel cell system; 12 fuel cell; 14 humidifier; 16 gas-liquid separator; 18 hydrogen sensor; 20 housing; 22 core portion; 24 expanding core portion, 26 narrowing core portion; 30 swirling fin; 32 deflecting fin; 34, 36 arrow; 40 upstream housing; 42 downstream housing; 50 hole; 52 protrusion.

## Claims

1. A gas-liquid separator for a gas sensor, comprising:
a swirl structure configured to cause a gas, which flows from upstream to downstream, to swirl about a flow axis extending from upstream to downstream;
a separation structure configured to release a liquid component contained in the gas having passed through the swirl structure, out of the separation structure; and
a deflection structure disposed downstream of the swirl structure and configured to deflect the gas having passed through the swirl structure;
wherein the deflection structure comprises
a narrowing core portion having a three-dimensional tapered shape being tapered down toward a downstream end, and
a deflecting fin disposed on a side surface of the narrowing core portion and configured to deflect the air in a direction opposite to a swirling direction established by the swirl structure.

2. The gas-liquid separator for a gas sensor according to Claim 1, wherein
the side surface of the narrowing core portion has an inclination with respect to a direction of the flow axis, and the inclination of the side surface located downstream of a predetermined point on the flow axis is smaller than the inclination of the side surface located upstream of the predetermined point.

3. The gas-liquid separator for a gas sensor according to Claim 1 or 2, wherein
a downstream end of the narrowing core portion has a curved surface protruding downstream.

4. The gas-liquid separator for a gas sensor according to any one of Claims 1 to 3, wherein the swirl structure comprises:
an expanding core portion having a three-dimensional expanded shape being expanded from upstream to downstream, and
a swirling fin disposed on a side surface of the expanding core portion and configured to swirl the gas, and
a downstream end of the expanding core portion is connected to an upstream end of the narrowing core portion.

5. The gas-liquid separator for a gas sensor according to any one of Claims 1 to 4, further comprising:
a housing designed to surround the narrowing core portion in a state of maintaining a space from the side surface of the narrowing core portion;
wherein the separation structure comprises
a hole defined at a position corresponding to an upstream end of the narrowing core portion, the hole penetrating through the housing from inside to outside thereof, and
a protrusion arranged adj acent to the hole on a downstream side thereof and protruding inward of the housing.

6. The gas-liquid separator for a gas sensor according to any one of Claims 1 to 5, wherein:
the narrowing core portion is a rotationally symmetric body having a center axis defined by the flow axis, and
the deflecting fin comprises a plurality of deflecting fins arranged at equal angular intervals in a circumferential direction of the side surface about the flow axis.
